# EUROPÄISCHE PATENTANMELDUNG

(11) **EP 1 432 202 A2**
(43) Veröffentlichungstag der Anmeldung: **23.06.2004**
(21) Anmeldenummer: 03024215.0
(22) Anmeldetag: 22.10.2003
(51) Int. Cl.: H04L 29/06

(54) **Kommunikationsmodul für Medienwiedergabegeräte**

(30) Priorität: 21.12.2002 DE 10260427
(71) Anmelder: Deutsche Telekom AG, 53113 Bonn (DE)
(72) Erfinder: Brackmann, Ludwig, Dipl.-Ing., 53225 Bonn (DE); Schmidt, Heidrun, 0787 Krölpa OT Oelsen (DE)

(57) **Zusammenfassung**

Verfahren zur Herstellung einer Netzverbindung zwischen einem Nutzer, der vermittels eines Ausgabegerätes eine über ein Medium verbreitete Darbietung enthaltend eine Information dargeboten bekommt, und einem Anbieter, dessen mit Information versehene Darbietung verbreitet wird, wobei Nutzer und Anbieter über ein Telekommunikationsnetz verbunden sind, wobei die Information eine insbesondere dem Anbieter zuzuordnende Netzkennung enthält, über deren Anwahl eine dem Nutzer zuteil werdende Serviceleistung abgerufen wird, und wobei die in der Information enthaltene Netzkennung automatisch angewählt und eine Verbindung zum Abruf der Serviceleistung hergestellt wird, sobald der Nutzer ein vorgegebenes Signal abgibt.

## Beschreibung

Die vorliegende Erfindung betrifft ein Verfahren zur Herstellung einer Netzverbindung zwischen einem Nutzer, der vermittels eines Ausgabegerätes über ein Medium eine Darbietung enthaltend eine Information dargeboten bekommt, und einem Anbieter, dessen mit der Information versehene Darbietung über das Medium verbreitet wird, wobei der Nutzer und der Anbieter über ein Telekommunikationsnetz verbunden sind und wobei die Information eine insbesondere dem Anbieter zuzuordnende Netzkennung enthält, über deren Anwahl eine dem Nutzer zuteil werdende Serviceleistung abrufbar ist. Zudem betrifft die Erfindung ein System zur Umsetzung des Verfahrens.

Insbesondere bei Rundfunk oder Fernsehdarbietungen ist es üblich, während der Darbietung im Rahmen einer Sendung eine Information, beispielsweise eine Telephonnummer oder E-Mail Adresse, zu verbreiten, über die ein Nutzer, also der Hörer oder Zuschauer, Kontakt zu dem Anbieter aufnehmen kann. Mitunter werden in einer solchen Darbietung Preise ausgelobt oder aktuelle Fragen beantwortet. Um während der Sendung den Kontakt zum Anbieter herstellen zu können, muss der Nutzer möglichst sofort die angegebene Kontaktadresse anwählen. Nachteilig ist, dass diese Information meist nur für einen kurzen Moment ausgestrahlt wird und der Nutzer gerade in diesem Moment meist keine Möglichkeit hat, die Information zu notieren. Dabei ist es für den Nutzer gerade bei Gewinnspielen von Vorteil, möglichst einer der ersten zu sein, der sich beim Anbieter meldet. Nur damit hat er Aussicht auf Erfolg.

Aufgabe der Erfindung ist es nunmehr, ein Verfahren zur Herstellung einer Netzverbindung zu schaffen, das sich einfach und mit kostengünstigen Mitteln umsetzen lässt und das dem Nutzer eine einfache und komfortable Möglichkeit bietet, prompt auf die über das Medium erhaltene Information zu reagieren, ohne die Information notieren oder sich merken zu müssen. Außerdem soll ein System zur Umsetzung des Verfahrens geschaffen werden.

Diese Aufgaben werden durch das Verfahren mit den kennzeichnenden Merkmalen des Anspruch 1 und das System nach Anspruch 6 gelöst.

Der besondere Erfindungsgedanke liegt darin, die in der Darbietung ausgestrahlte Netzkennung in gewisser Weise aktiv zu schalten, so dass der Nutzer durch einen einfachen Befehl die Adresse über ein Kommunikationsnetz automatisch anwählen und damit eine Verbindung herstellen kann, um die unter der Adresse angebotene Serviceleistung abzurufen. Dabei bezieht sich die Erfindung nicht ausschließlich auf aktuelle Darbietungen, wie Rundfunk- oder Fernsehsendungen. Es ist auch möglich, Darbietungen "aus der Konserve" mit Informationen zu versehen, die über eine solche Anwahl abgerufen werden können. So können beispielsweise Hintergrundinformationen zu einem gerade von einer CD gespielten Musikstück via Internet beim Produzenten des Datenträgers abrufbar sein. Das "aktiv schalten" kann an sich innerhalb einer beliebigen Zeit erfolgen, wobei es besonders vorteilhaft ist, ein Zeitfenster vorzusehen, das während der Darbietung geöffnet ist und innerhalb dem der Nutzer das Signal abgeben kann. Innerhalb des Zeitfensters ist ein Kommunikationsmodul für die Kommunikation über die eingeblendete Netzkennung aktiv geschaltet.

Die Vorteile der Erfindung liegen darin, dass der Nutzer unmittelbar mit einem einfachen Befehl oder Signal ohne Zwischenschaltung weiterer Aktivität eine Serviceleistung abrufen kann. Der Vorteil für die Anbieter ist, dass die Attraktivität ihrer angebotenen Darbietung aus Sicht der Nutzer und damit auch aus Sicht von Werbekunden oder Sponsoren steigt. Durch die Erfindung wird die Hemmschwelle für den Nutzer, sich schnell mal eben in eine Darbietung einzuwählen, erheblich reduziert. Letztendlich bringt die Erfindung damit auch dem Netzbetreiber, der von der Auslastung seines Netzes profitiert, einen finanziellen Vorteil. Gerade für die über TV ausgestrahlten Verkaufssendungen, wie QVC, bietet die Erfindung große Vorteile, da der Kunde mit nur einem Befehl eine Bestellung durchführen kann.

Technisch umsetzen lässt sich die Erfindung durch ein als Kommunikationsmodul bezeichnetes zusätzliches Gerät. Dieses Modul kann als "stand-alone" Gerät oder als Teil eines dem Nutzer zur Verfügung stehenden Medienwiedergabegerätes, wie einem Fernseher (TV) oder einem Rundfunkgerät realisiert werden. Mit dem Modul kann eine direkte Kommunikation zwischen dem Nutzer und dem Anbieter, z.B. einem Mediensender, unter Einbindung zu beschreibender Kontaktdaten hergestellt werden. Erfindungsgemäß veranlasst das Modul auf Kommando des Nutzers zunächst den Aufbau der Kommunikationsverbindung insbesondere über eine Sprachverbindung ("voice-call") oder E-Mail und/oder bewerkstelligt dann die Übertragung der angebotenen Information respektive der Serviceleistung, wie beispielsweise einen Faxabruf. Es ist vorteilhaft, wenn das Kommunikationsmodul vermittels eines "intelligenten" Programms die Netzkennung aus der Darbietung herausfiltert.

Das Medienwiedergabegerät, beispielsweise ein Fernseher, ein Radio oder ein VCR (Video Cassette Recorder), werden in einer besonderen Ausführungsform bei erstmaliger Einrichtung initialisiert durch die Hinterlegung von Kontaktdaten, wie E-Mail Adresse, Telephon- oder Faxnummer insbesondere eines Nutzers. Die Einprogrammierung der Parameter dabei kann direkt am Gerät oder durch eine Datenübertragung zwischen dem Gerät und einem Mobiltelephon oder einem PDA (Personal Digital Assistant) unter Verwendung des Kommunikationsmodules erfolgen. Das Versenden der Kontaktdaten an das Telekommunikationsendgerät, wie Telephon, Handy, Fax oder PC, kann über eine Nahfunkschnittstelle (z.B. Blue Tooth), über Infrarot oder per Datenkabel erfolgen. Das Telekommunikationsendgerät initiiert dann automatisch die Kommunikationsverbindung. Dabei können die Ziel-Kontaktdaten im Falle des TV über den Video-Text oder im Falle des Rundfunk über RDS (Radio Data System) versendet werden.

Die Erfindung kann sich in verschiedenen Ausführungsformen manifestieren. Nachfolgend werden nicht abschließend einige Beispiele genannt.:

Ein Beispiel, das schon in der Beschreibung angesprochen wurde, ist die "Call-Funktion für TV-Sendungen". Wie dargelegt, ist es bekannt, dass TV-Sender während einer Sendung (Darbietung) oder im Anschluss an eine Sendung eine Telefonnummer einblenden, unter der Bestellungen getätigt werden können, eine Teilnahme an einem Gewinnspiel respektive Fernsehquiz möglich ist oder Informationen, wie beispielsweise Börsenkurse, zum Abruf bereitstehen. Oftmals hat der Nutzer nicht gleich Stift und Zettel parat, um die angegebene Rufnummer aufschreiben zu können. Der Fernsehzuschauer muss sich also die eingeblendete Telefonnummer merken, sie in ein Endgerät eintippen und kann erst dann durch einen Anruf das Angebot der TV-Shows nutzen.

Erfindungsgemäß hat das TV-Gerät mit dem integrierten Kommunikationsmodul eine Kommunikationsverbindung, die z.B. via Funk, Bluetooth, Kabel oder Infrarot zum Telefonanschluß führt. Die eingeblendete Rufnummer wird z.B. aus der Anzeige des TV-Gerätes oder aus Sprachsignalen erkannt. Der Zuschauer braucht jetzt nur mit der Fernbedienung über einen einzigen Knopfdruck oder per Sprachbefehl auf eine zuvor festgelegte Taste den Wunsch nach Aufbau einer Kommunikationsverbindung zu äußern. Dadurch initiiert das TV-Gerät über integrierte Software bzw. das zusätzliche Kommunikationsmodul eine Telefonverbindung zwischen dem Telefon des Endbenutzers und der im TV angegebenen Telefonnummer. Die Rufverbindung wird sofort hergestellt. Dem Fernsehzuschauer wird damit ein zusätzlicher Service geboten, durch den er bequem und einfach über den Fernseher mit nur einem einzigen Befehl eine Telefonverbindung aufbauen kann.

Ein weiteres Beispiel stellt die "E-Mail Funktion für TV-Sendungen" dar. So ist mittlerweile jeder TV Sender mit mehreren Themen im Internet präsent. Zu bestimmten Sendungen können vom Zuschauer weiterführende Informationen auf der entsprechenden Homepage nachgelesen werden. Meist sind dort auch themenbezogene Bilder und Berichte hinterlegt. Der Zuschauer muss sich jedoch bislang vermittels eines PC über das Internet Zugang zu den Themengebieten verschaffen. Erfindungsgemäß kann er per Knopfdruck Informationen per E-Mail anfordern oder seine E-Mail Adresse dem Anbieter übermitteln.

Erfindungsgemäß besteht nun bei erstmaliger Einrichtung des Fernsehgerätes die Notwendigkeit, die persönlichen Daten des Nutzers, wie E-Mail-Adresse, Telefonoder Faxnummer, im Gerät zu hinterlegen. Die Einprogrammierung der Parameter kann auf die beschriebene Weise erfolgen.

Ein weiteres Ausführungsbeispiel bezieht sich auf mögliche Fax-Abrufe für TV-Sendungen. So existieren bei TV-Sendungen auch heute schon Zusatzangebote in Form von Faxabruf-Services, bei denen die Übertragung der Nummer vom TV-Gerät zum Fax-Gerät noch manuell geschieht. Der TV-Sender bietet nun an, Informationen bei Anfrage direkt an die hinterlegte Faxnummer zu senden. Erfindungsgemäß veranlasst der Zuschauer wiederum über einen einfachen Befehl den Fax-Abruf, wobei es einer Kommunikationsverbindung, wie Funk, Bluetooth oder Kabel zwischen Fernseher und Faxgerät bedarf. Hierzu kann das zusätzliche Kommunikationsmodul verwendet werden. Es wäre auch denkbar, ähnlich wie bei einem Screen-Shot die Daten vom Fernseher auf die angegebene Faxnummer zu übertragen. Der Nutzer benötigt dazu nicht extra einen PC, um sich wie bisher die Informationen von den Webseiten der TV-Sender ausdrucken zu lassen. Dem Fernsehzuschauer wird ein zusätzlicher Komfort-Service geboten, durch den er bequem und einfach über den Fernseher mit einem Tastendruck Faxe gesendet bekommt.

Ähnliche Ausführungsbeispiele beziehen sich auf Rundfunkgeräte. So ist ein Ausführungsbeispiel eine "Call-Funktion für Radio-Informationen". So bieten Radiosender in vielerlei Hinsicht Info-Service-Dienste, wie die Teilnahme an einem Gewinnspiel, Verkehrs- und Staumeldungen sowie Bestellungen an, wobei die gewünschten Informationen unter einer angesagten Rufnummer abgefragt werden können. Der Rundfunkhörer muss sich die angesagte Telefonnummer kurzzeitig merken, eintippen und kann erst dann durch einen Anruf das Angebot der Radio-Sender nutzen. Bei vielen Radio-Geräte kann mittlerweile die Telefonnummer über das RDS (Radio Daten System) im Display kurzzeitig angezeigt werden.

Erfindungsgemäß erhält das Rundfunkgerät über das Kommunikationsmodul eine Kommunikationsmöglichkeit, beispielsweise über Funk, Bluetooth, Kabel oder Infrarot zum Telefonanschluß. Von den Rundfunksendern werden ständig oder nur zu einem bestimmten Zeitpunkt während der Darbietung die Information zum Rundfunkgerät übertragen. Über einen Sprachbefehl, einen Knopfdruck am Gerät oder einer Fernbedienung veranlasst der Zuhörer die Datenübertragung der in der Information ausgestrahlten Rufnummer weiter auf sein Telefon, sein Handy oder seine Telefonanlage und initiiert damit den sofortigen Verbindungsaufbau. Dem Zuhörer wird damit ein Service geboten, durch den er bequem und einfach über sein Radio mit einem Signal die Weiterleitung der angesagten oder angezeigten Telephonnummer veranlassen kann.

Ein weiteres Ausführungsbeispiel besteht in einer "E-Mail-Funktion für Radio-Information". So bieten Radiosender Info-Service-Dienste, wie die Teilnahme an einem Gewinnspiel, Verkehrs- bzw. Staumeldungen, Horoskope, Bestellungen und Ähnliches an. Interessante Informationen kann sich der Nutzer auch per SMS auf sein Handy zusenden lassen oder über einen Telefonanruf erfahren. Auf der Homepage des jeweiligen Senders findet er zu bestimmten Themen oftmals auch Angaben im Internet.

Wie schon erwähnt, kann die E-mail-Adresse im Rundfunkgerät abgespeichert werden. Radio-Sender bieten nun an, Informationen in üblichen Dateiformaten bei Anfrage direkt an die hinterlegte E-mail-Adresse zu senden. Über ein Signal veranlasst der Zuhörer die Freigabe und die Übertragung der eigenen E-mail-Adresse. Erfindungsgemäß besteht eine Kommunikationsverbindung zwischen dem Radiogerät und dem E-Mail-Provider. Dem Rundfunk-Zuhörer wird damit ein zusätzlicher Service geboten, durch den er bequem und einfach über sein Radio mit einem einzige Kommando die Weiterleitung der angesagten oder angezeigten Informationen auf seine E-Mail veranlassen kann. Eine ähnliche Ausführung ist der "Fax-Abruf für Radio Informationen" bei dem der Nutzer ebenso bequem und einfach über sein Radiogerät mit einem einzigen Signal die Weiterleitung der angesagten oder angezeigten Informationen auf sein Fax-Gerät veranlassen kann.

Ein Ausführungsbeispiel, das sich auf Darbietungen "aus der Konserve" bezieht, ist die "Call / E-Mail / Fax Funktion". So enthalten Multimedia-Datenträger, wie DVDs, CDs, Videos oder Tonträger (auch MP3-Abspielgeräte) oftmals neben dem Ton- und Bildmaterial auch Informationen über Dreharbeiten, Studioaufnahmen, Bestellmöglichkeiten für Merchandising-Artikel und Ähnliches. Solche Informationen, die erst nach der Produktion entstanden sind, erfährt der Nutzer meist über das Internet, in Zeitschriften oder im Fernsehen.

Erfindungsgemäß besteht eine der genannten Kommunikationsverbindungen zwischen dem Abspielgerät (DVD-Player, Videorecorder, Disk-Man, MP3) und einem Telefon sowie zwischen Abspielgerät und dem Internet. Dazu wird das Kommunikationsmodul eingesetzt, wobei persönlichen Daten im Wiedergabegerät hinterlegt werden. Über einen Knopfdruck oder einen Sprachbefehl veranlasst der Nutzer die Freigabe und Übertragung dieser persönlichen Daten. Damit äußert der Nutzer den Wunsch, weitere aktuellen Informationen zu erhalten. Es stehen dabei folgende Möglichkeiten offen: Entweder wird eine Telefonverbindung zwischen der Info-Hotline des Datenträgers und der eigenen Festnetz- oder Handynummer aufgebaut oder die neuesten Informationen werden aus dem Internet direkt auf die vom Nutzer angegebene E-Mail-Adresse bzw. Faxnummer übertragen.

## Patentansprüche

1. Verfahren zur Herstellung einer Netzverbindung zwischen einem Nutzer, der vermittels eines Ausgabegerätes eine über ein Medium verbreitete Darbietung enthaltend eine Information dargeboten bekommt, und einem Anbieter, dessen mit Information versehene Darbietung verbreitet wird, wobei Nutzer und Anbieter über ein Telekommunikationsnetz verbunden sind und wobei die Information eine insbesondere dem Anbieter zuzuordnende Netzkennung enthält, über deren Anwahl eine dem Nutzer zuteil werdende Serviceleistung abgerufen wird,
**dadurch gekennzeichnet,**
**dass** die in der Information enthaltene Netzkennung automatisch angewählt und eine Verbindung zum Abruf der Serviceleistung hergestellt wird, sobald der Nutzer ein vorgegebenes Signal abgibt.

2. Verfahren nach Anspruch 1,
**dadurch gekennzeichnet, dass** der Nutzer das Signal innerhalb eines während der Darbietung geöffneten Zeitfensters abgibt, wobei innerhalb des Zeitfensters ein Kommunikationsmodul für die Kommunikation über die Netzkennung aktiv geschaltet ist.

3. Verfahren nach Anspruch 1 oder 2,
**dadurch gekennzeichnet, dass** dem Kommunikationsmodul Kontaktdaten des Nutzers, wie E-Mail-Adresse und/oder Telephon- und/oder Faxnummer vorgegeben werden, wobei diese Kontaktdaten bei der Netzverbindung zum Anbieter übertragen werden.

4. Verfahren nach einem der vorherigen Ansprüche,
**dadurch gekennzeichnet, dass** der Nutzer als Signal ein Spracheingabe Kommando abgibt.

5. Verfahren nach einem der vorherigen Ansprüche,
**dadurch gekennzeichnet, dass** der Nutzer als Signal eine mit nur einem Knopfdruck einer Fernbedienung initiierbare Dateneingabe abgibt.

6. System, insbesondere zur Durchführung des Verfahrens nach einem der vorherigen Ansprüche, aufweisend ein Wiedergabegerät, mit welchem dem Nutzer eine über das Medium ausgesendete Darbietung vorführbar ist, und aufweisend einen dem Nutzer zugeordnetes Endgerät, das dem Nutzer Zugang zu einem eine Vielzahl von Teilnehmern aufweisenden Telekommunikationsnetz ermöglicht, wobei jeder Nutzer über eine individuelle Netzkennung anwählbar ist,
**gekennzeichnet durch** ein mit dem Endgerät und mit dem Wiedergabegerät in Verbindung stehenden Kommunikationsmodul, das während einer Darbietung empfangsbereit ist für ein vom Nutzer abgegebenes Signal und das nach Empfang des Signals automatisch über das Telekommunikationsnetz eine Netzverbindung zu einem Anbieter herstellt, dessen Netzkennung im Rahmen der Darbietung als Information über das Medium verbreitet worden ist.

7. System nach Anspruch 6,
**dadurch gekennzeichnet, dass** das Kommunikationsmodul Teil des Medienwiedergabegerätes oder des Endgerätes ist.

8. System nach einem der Ansprüche 6 oder 7,
**dadurch gekennzeichnet, dass** das Kommunikationsmodul die in einer Darbietung enthaltene Information automatisch erkennt und nach der Erkennung bereit ist, die über die Information verbreitete Netzkennung dem Endgerät, insbesondere einem PC oder einer Telephonanlage, zur Anwahl vorzugeben.

9. Vorrichtung nach Anspruch 8,
**dadurch gekennzeichnet, dass** das Kommunikationsmodul vermittels eines "intelligenten" Programms die Netzkennung aus der Darbietung herausfiltert.
